(19) Europäisches Patentamt
European Patent Office
Office européen des brevets

(11) Veröffentlichungsnummer: **0 666 286 A2**

(12) **EUROPÄISCHE PATENTANMELDUNG**

(21) Anmeldenummer: **95101125.3**

(51) Int. Cl.6: **C08L 81/06**, C08K 7/06

(22) Anmeldetag: **27.01.95**

(30) Priorität: **07.02.94 DE 4403677**

(43) Veröffentlichungstag der Anmeldung: **09.08.95 Patentblatt 95/32**

(84) Benannte Vertragsstaaten: **BE DE FR GB NL**

(71) Anmelder: **BASF AKTIENGESELLSCHAFT**

**D-67056 Ludwigshafen (DE)**

(72) Erfinder: **Weber, Martin, Dr.**
**Eckstrasse 19**
**D-67433 Neustadt (DE)**
Erfinder: **Hoffmann, Jürgen**
**Muenschbuschweg 30c**
**D-67069 Ludwigshafen (DE)**
Erfinder: **Wallner, Hans**
**Richard Lenel Strasse 59**
**D-68259 Mannheim (DE)**
Erfinder: **Koch, Eckhard Michael, Dr.**
**Merowingerstrasse 8**
**D-67136 Fussgönheim (DE)**

(54) **Formmassen auf der Basis von Polyarylenetherblends und Kohlefasern.**

(57) Formmassen aus
A) 25 bis 98 Gew.-% Polyarylenether, enthaltend sich wiederholende Struktureinheiten der allgemeinen Formel I

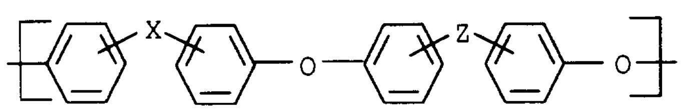

(I)

oder Struktureinheiten I, deren aromatische Kerne mit $C_1$- bis $C_6$-Alkyl-, $C_1$- bis $C_6$-Alkoxy-, Aryl-, Chlor- oder Fluor substituiert sein können, wobei

X -$SO_2$-, -SO-, -S, -O-, -CO-, -N=N-, -RC=$CR^a$-, -$CR^bR^c$- oder eine chemische Bindung sein kann und

Z ausgewählt ist aus -$SO_2$-, -SO-, CO, -N=N- und -RC=$CR^a$-, wobei

R und $R^a$ jeweils Wasserstoff oder eine $C_1$- bis $C_6$-Alkylgruppe darstellen,

$R^b$ und $R^c$ jeweils Wasserstoff oder eine $C_1$- bis $C_6$-Alkyl-, $C_4$- bis $C_{10}$-Cycloalkyl-, $C_1$- bis $C_6$-Alkoxy- oder Arylgruppe oder jeweils deren Fluor- oder Chlorderivate sein können,

B) 1 bis 45 Gew.-% weiterer Polymerer, ausgewählt aus der Gruppe der Polyamide, Polycarbonate, Styrolcopolymeren und von den Polyarylenethern (A) verschiedenen Polyarylensulfiden,
C) 1 bis 30 Gew.-% Kohlefasern einer Länge von weniger als 120 µm, berechnet als Zahlenmittelwert,
D) 0 bis 40 Gew.-% Füllstoffe ausgewählt aus der Gruppe der amorphen Kieselsäuren, Magnesiumcarbonate, gepulverte Quarze, Glimmer, Talkum, Feldspate und Calciumsilikate,
E) 0 bis 40 Gew.-% schlagzähmodifizierende Kautschuke und
F) 0 bis 40 Gew.-% weiterer Additive, wobei die Summe der Komponenten A bis F 100 Gew.-% ergibt.

EP 0 666 286 A2

Die vorliegende Erfindung betrifft Formmassen aus

A) 25 bis 98 Gew.-% Polyarylenether, enthaltend sich wiederholende Struktureinheiten der allgemeinen Formel I

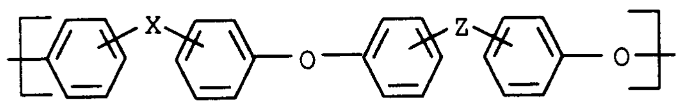

(I)

oder Struktureinheiten I, deren aromatische Kerne mit $C_1$- bis $C_6$-Alkyl-, $C_1$- bis $C_6$-Alkoxy-, Aryl-, Chlor- oder Fluor substituiert sein können, wobei

X -$SO_2$-, -SO-, -S-, -O-, -CO-, -N = N-, RC = $CR^a$-, -$CR^bR^C$- oder eine chemische Bindung sein kann und

Z ausgewählt ist aus -$SO_2$-, -SO-, CO, -N = N- und -RC = $CR^a$-,

wobei

R und $R^a$ jeweils Wasserstoff oder eine $C_1$- bis $C_6$-Alkylgruppe darstellen,

$R^b$ und $R^c$ jeweils Wasserstoff oder eine $C_1$- bis $C_6$-Alkyl-, $C_4$- bis $C_{10}$-Cycloalkyl-, $C_1$- bis $C_6$-Alkoxy- oder Arylgruppe oder jeweils deren Fluor- oder Chlorderivate sein können,

B) 1 bis 45 Gew.-% weiterer Polymerer, ausgewählt aus der Gruppe der Polyamide, Polycarbonate, Styrolcopolymeren und von den Polyarylenethern (A) verschiedenen Polyarylensulfiden,

C) 1 bis 30 Gew.-% Kohlefasern einer Länge von weniger als 120 $\mu$m, berechnet als Zahlenmittelwert,

D) 0 bis 40 Gew.-% Füllstoffe ausgewählt aus der Gruppe der amorphen Kieselsäuren, Magnesiumcarbonate, gepulverte Quarze, Glimmer, Talkum, Feldspate und Calciumsilikate,

E) 0 bis 40 Gew.-% schlagzähmodifizierende Kautschuke und

F) 0 bis 40 Gew.-% weiterer Additive, wobei die Summe der Komponenten A bis F 100 Gew.-% ergibt.

Darüber hinaus betrifft sie ein Verfahren zur Herstellung solcher Formmassen und deren Verwendung.

Mischungen auf der Basis von Polyarylenethern sind an sich bekannt. Ebenso ist bekannt, diesen Blends Kohlefasern zuzumischen, um die Blends zu verstärken oder auch um deren Leitfähigkeit heraufzusetzen. Zumeist werden die Kohlefasern zusammen mit anderen Füllstoffen oder Verstärkungsmitteln bzw. zusammen mit leitfähigen Füllstoffen eingesetzt.

So sind in der WO 91/01612 verschiedene Mischungen für unterschiedliche Anwendungszwecke offenbart, die neben Kohlefibrillen auch Kohlefasern enthalten. In der EP-A 185 753 und der DE-A 40 42 268 werden die synergistischen Effekte hervorgehoben, die sich daraus ergaben, daß die Kohlefasern in Kombination mit Metallflocken oder Ruß in Polymerblends verwendet werden. Aus der EP-A 451 803 waren Mischungen auf der Basis von Polyarylenethern und Polyphenylsulfid bekannt, die als leitfähigen Füllstoff Ruß enthalten, wobei jedoch von der Verwendung von Kohlefasern abgeraten wird. Im allgemeinen verschlechtern sich die mechanischen Eigenschaften von Kunststoffen, die leitfähige Füllstoffe wie Ruß oder Metallflocken enthalten.

Aus der deutschen Anmeldung Nr. P 43 21 002.3 waren Blends zu entnehmen, die Polyarylenether, Styrolcopolymere und Kohlefasern enthalten können.

Für viele Anwendungen, die einen Werkstoff erfordern, der sich zu großen Teilen spritzen läßt, die sich weder während des Spritzvorgangs noch beim Gebrauch verziehen und deren Oberflächenwiderstand kleiner als $10^9$ $\Omega$ ist, sind die bekannten Blends nicht geeignet.

Aufgabe der vorliegenden Erfindung war es daher Blends auf der Basis von Polyarylenethern zur Verfügung zu stellen, die den oben genannten Anforderungen genügen.

Diese Aufgabe wird von den eingangs definierten Blends erfüllt.

Komponente A

Die erfindungsgemäßen Formmassen sind aufgebaut aus 25 bis 98 Gew.-% der Komponente A. Besonders bevorzugt werden Formmassen, die von 30 bis 95 Gew.-% dieser Komponente enthalten.

Als Komponente A eignen sich erfindungsgemäß Polyarylenether, die sich wiederholende Struktureinheiten der allgemeinen Formel I

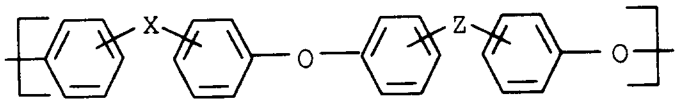 (I)

enthalten. Ebenso können deren kernsubstituierte Derivate verwendet werden. Als Substituenten kommen vorzugsweise $C_1$-$C_6$-Alkyl, wie Methyl, Ethyl oder t-Butyl, $C_1$-$C_6$-Alkoxy, wie Methoxy oder Ethoxy, Aryl, insbesondere Phenyl, Chlor oder Fluor in Betracht. Die Variable X kann $-SO_2-$, -SO-, -S-, -O-, -CO-, -N = N-, -RC = $CR^a$-, -$CR^bR^c$- oder eine chemische Bindung sein. Die Variable Z kann für $-SO_2-$, -SO-, -N = N- und -RC = $CR^{a-}$, stehen. Hierbei stellen R und $R^a$ jeweils Wasserstoff, $C_1$-$C_6$-Alkyl, z.B. Methyl, n-Propyl oder n-Hexyl, $C_1$-$C_6$-Alkoxy, darunter Methoxy, Ethoxy, oder Butoxy, oder Aryl, insbesondere Phenyl dar. Die Reste $R^b$ und $R^c$ können jeweils Wasserstoff oder eine $C_1$- bis $C_6$-Alkylgruppe, insbesondere Methyl, darstellen. Sie können aber auch zu einem $C_4$- bis $C_{10}$-Cycloalkylring miteinander verknüpft sein, der seinerseits mit einer oder mehreren Alkylgruppen, vorzugsweise Methyl substituiert sein kann. Daneben können $R^b$ und $R^c$ auch eine $C_1$- bis $C_6$-Alkoxygruppe, z.B. Methoxy oder Ethoxy oder eine Arylgruppe, besonders Phenyl, darstellen. Die vorgenannten Gruppen können ihrerseits jeweils mit Chlor oder Fluor substituiert sein.

Einige der geeigneten Struktureinheiten sind:

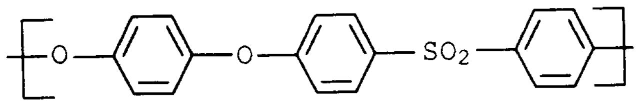
$(I_3)$

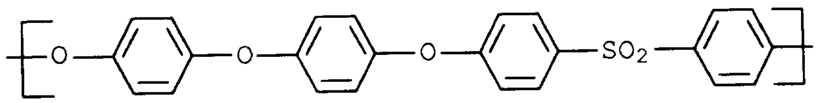
$(I_4)$

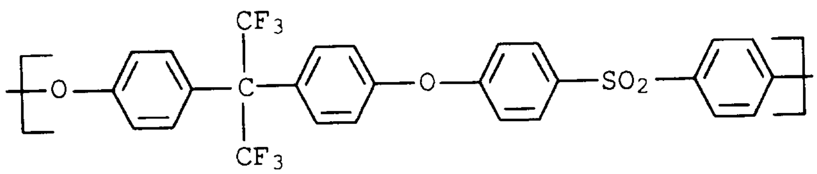
$(I_5)$

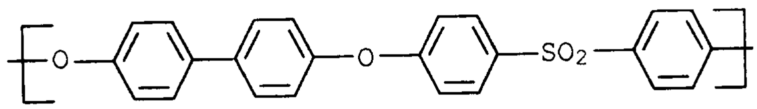
$(I_6)$

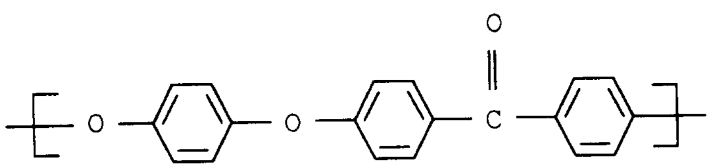
$(I_7)$

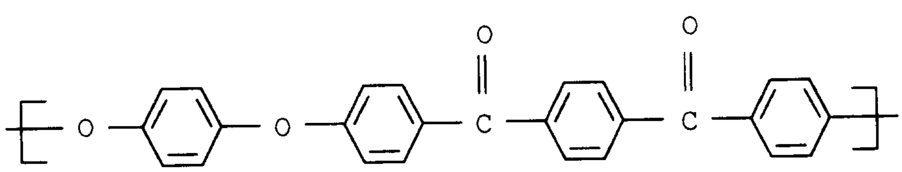
$(I_8)$

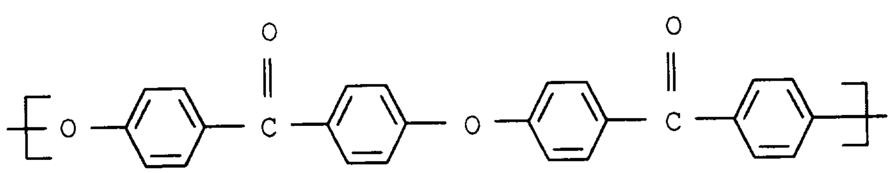
$(I_9)$

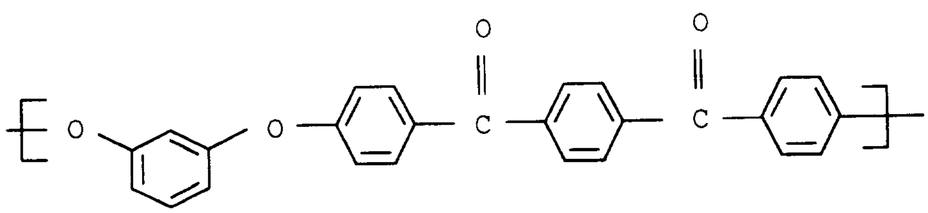
$(I_{10})$

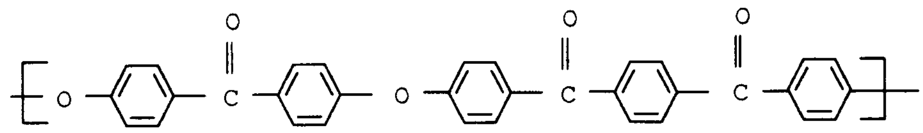
($I_{11}$)

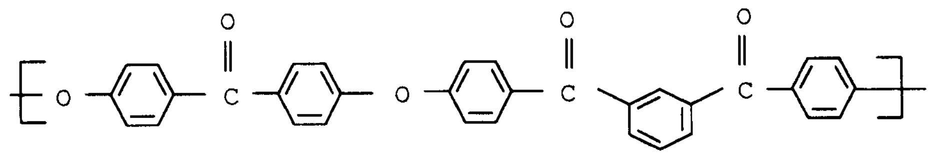
($I_{12}$)

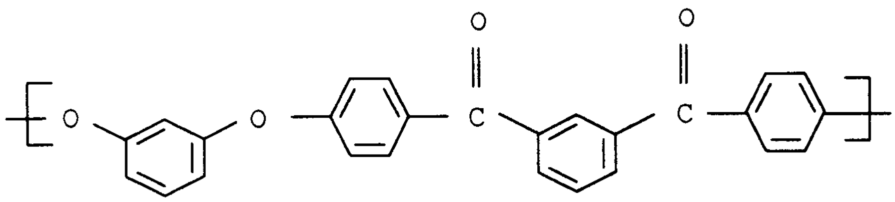
($I_{13}$)

Die Polyarylenether können beliebige Endgruppen, wie Halogen-, Methoxy-, Hydroxy-, Phenoxy-, Benzyloxy- oder Aminoendgruppen enthalten. Bevorzugt werden jedoch Polyarylenether mit Halogen- und Methoxyendgruppen.

Die Molekulargewichte (Zahlenmittel $\overline{M}_n$) geeigneter Polyarylenether A liegen im allgemeinen im Bereich von 1500 bis 60 000 g/mol, bevorzugt im Bereich von 3000 bis 50 000 g/mol.

Zu den geeigneten Polyarylenethern A zählen auch Copolymere aufgebaut aus Polyarylethersegmenten und Struktureinheiten ausgewählt aus der Gruppe der Polyester, aromatischen Polycarbonate, Polyestercarbonate, Polysiloxane, Polyimide, Polyamidimide und Polyetherimide. Die Molekulargewichte der Polyaryletherblöcke bzw. der Polyaryletherpfropfarme in derartigen Copolymeren liegen im allgemeinen im Bereich von 1000-30000 g/mol. Die Blöcke unterschiedlicher Struktur können in den Copolymeren alternierend oder statistisch angeordnet sein. Der Gewichtsanteil der Polyarylenether in den Copolymeren beträgt im allgemeinen 3 bis 97, vorzugsweise 10 bis 90 und insbesondere 20 bis 80 Gew.-%.

Es können auch Mischungen verschiedener Polyarylenether A verwendet werden.

Zu den besonders bevorzugten Polyarylenethern A zählen solche mit

$a_1$) 0 bis 100 Mol-%, bevorzugt 3 bis 97 Mol-% sich wiederholenden Struktureinheiten

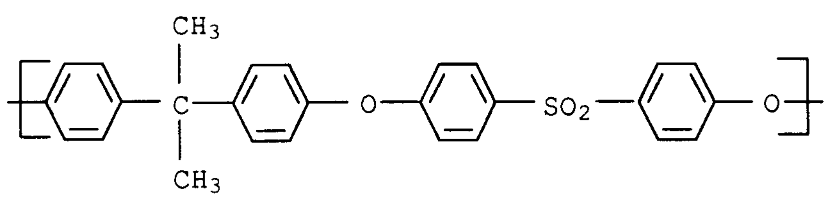
($I_1$)

und

$a_2$) 0 bis 100 Mol-%, bevorzugt 3 bis 97 Mol-% sich wiederholenden Struktureinheiten

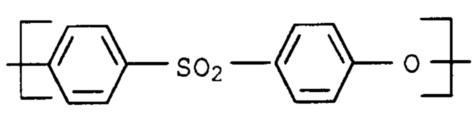
($I_2$),

wobei sich die Molprozentangabe auf den Gehalt an $SO_2$-Gruppen bezieht.

Die Herstellung der Polyarylenether A ist allgemein bekannt (vgl. z.B. GB 1 152 035; US 4 870 153; WO 84 03891), ebenso die Herstellung von Polyarylenethern mit Blockstruktur (DE 37 42 264) . Methoden zur Synthese von Copolymeren sind z.B. bei A. Noshay et al. Block Copolymers, Academic Press, 1977, beschrieben.

Geeignete Verfahrensbedingungen zur Synthese von Polyarylenethern sind beispielsweise in den EP-A 113 112 und 135 130 beschrieben.

Besonders geeignet ist die Umsetzung von monomeren Dihydroxy- mit Dihalogenverbindungen in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Base oder die Umsetzung in der Schmelze. Daneben eignet sich die Umsetzung von Säurechloriden mit aromatischen Verbindungen mit abstrahierbaren Wasserstoffatomen in Gegenwart von Lewissäuren wie Aluminiumtrichlorid.

Komponente B

Als weitere Komponente enthalten die erfindungsgemäßen Formmassen 1 bis 45 Gew.-%, bevorzugt 4 bis 40 Gew.-% weiterer Polymerer, die aus der Gruppe der Polyamide, Polycarbonate, Styrolcopolymeren und von den Polyarylenethern (A) verschiedenen Polyarylensulfiden ausgewählt sind.

Als Polyamide kommen beispielsweise amorphe Polyamide in Betracht.

Sie werden beispielsweise erhalten durch Polykondensation von Diaminen, wie Ethylendiamin, 2,2,4- und 2,4,4-Trimethylhexamethylendiamin, m- und p-Xylylendiamin, Bis-(4-aminocyclohexyl)-methan, Gemischen aus 4,4'- und 2,2'-Diaminodicyclohexylmethanen, 2,2-Bis-(4-aminocyclohexyl)-propan, 3,3'-Dimethyl-4,4'-diamino-dicyclohexyl)-propan, 3,3'-Dimethyl-4,4'-diaminodicyclohexylmethan, 3-Aminoethy1-3,5,5-trimethyl-cyclohexylamin, 2,5-Bis-(aminomethyl)-norbornan, 2,6-Bis-(aminomethyl)-norbornan und 1,4-Diaminomethylcyclohexan, und von beliebigen Gemischen dieser Diamine mit Dicarbonsäuren, wie beispielsweise mit Oxalsäure, Malonsäure, Bernsteinsäure, Adipinsäure, Azelainsäure, Decandicarbonsäure, Dodecandicarbonsäure, Heptadecandicarbonsäure, 2,2,4-Trimethyladipinsäure, 2,4,4-Trimethyladipinsäure, Isophthalsäure und Terephthalsäure, und mit beliebigen Gemischen dieser Dicarbonsäuren. Es sind somit auch amorphe Copolyamide einbezogen, die durch Polykondensation mehrerer der vorstehend genannten Diamine und/oder Dicarbonsäuren erhalten werden. Ferner sind amorphe Copolyamide einbezogen, die unter Mitverwendung von ω-Aminolaurinsäure und von deren Lactamen hergestellt sind.

Besonders geeignete, amorphe, thermoplastische Polyamide sind solche, die aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornan erhältlich sind, solche die aus Isophthalsäure, 4,4'Diamino-di-cyclohexylmethan und ω-Caprolactam erhältlich sind, solche, die aus Isophthalsäure, 3,3'-Dimethyl-4,4'-diamino-dicyclohexylmethan und ω-Laurinlactam erhältlich sind, und solche, die aus Terephthalsäure und 2,2,4- und/oder 2,4,4-Trimethylhexamethylendiamin erhältlich sind.

Anstelle des reinen 4,4'-Diaminodicyclohexylmethans können auch Gemische der stellungsisomeren Diaminodicyclohexylmethane eingesetzt werden.

Die amorphen Polyamide und ihre Herstellung sind bekannt (siehe beispielsweise Ullmann, Encyclopädie der technischen Chemie, Band 19, S. 50, 4. Auflage, 1980, Verlag Chemie).

Geeignete Polyamide sind beispielsweise auch teilkristalline Polyamide, z.B. Polyamid-6, Polyamid-6,6, Polyamid-4,6, Polyamid-6,12 und teilkristalline Copolyamide auf Basis dieser Komponenten.

Es ist auch möglich, Polyamide zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten.

Der Anteil an Einheiten, die sich von ε-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von ε-Caprolactam ableiten, erwiesen.

Die Herstellung der teilaromatischen Copolyamide kann z.B. nach dem in den EP-A 129 195 und EP 129 196 beschriebenen Verfahren erfolgen.

Bevorzugte teilaromatische Polyamide sind solche, die einen Gehalt an Einheiten des Dihexamethylentriamins von unter 0,5 Gew.-% bevorzugt unter 0,3 Gew.-% aufweisen.

Bevorzugt werden lineare Polyamide mit einem Schmelzpunkt über 200 °C.

Bevorzugte Polyamide sind Polyhexamethylenadipinsäureamid, Polyhexamethylensebacinsäureamid und Polycaprolactam sowie Polyamid 6/6T und Polyamid 66/6T. Die Polyamide weisen im allgemeinen relative Viskositäten von 2,0 bis 5 auf, bestimmt an einer 1 gew.-%igen Losung in 96 %iger Schwefelsaure bei 23 °C, was einem Molekulargewicht von etwa 15 000 bis 45 000 entspricht. Polyamide mit einer relativen Viskosität von 2,4 bis 3,5, insbesondere 2,5 bis 3,4 werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Geeignete Polycarbonate sind beispielsweise solche auf Basis von Diphenolen der allgemeinen Formel (II)

HO-Ar-A-Ar-OH (II)

worin

Ar ein Arylrest, beispielsweise Phenyl, Phenylalkyl, wie Phenyl-$C_1$- bis $C_{10}$-alkyl, halogensubstituiertes Aryl und

A eine Einfachbindung, $C_1$-$C_3$-Alkylen, $C_2$-$C_3$-Alkyliden-, $C_3$-$C_6$-Cycloalkylidengruppen sowie -S- oder -$SO_2$- bedeuten.

Bevorzugte Diphenole der allgemeinen Formel (II) sind beispielsweise Hydrochinon, Resorcin, 4,4'-Dihydroxybiphenyl, 2,2-Bis(4-hydroxyphenyl)-propan, 2,4-Bis-(4-hydroxyphenyl)-2-methylbutan, 1,1-Bis-(4-hydroxyphenyl)-cyclohexan, 1,1-Bis-(4-hydroxyphenyl)-2,2,4-trimethylcyclohexan. Besonders bevorzugt sind 2,2-Bis-(4-hydroxyphenyl)-propan und 1,1-Bis-(4-hydroxyphenyl)-2,2,4-trimethylcyclohexan.

Die Diphenole der allgemeinen Formel (II) sind an sich bekannt oder nach bekannten Verfahren herstellbar.

Die Diphenole der allgemeinen Formel (II) können sowohl einzeln als auch im Gemisch zur Herstellung der Polycarbonate verwendet werden.

Die geeigneten Polycarbonate können in bekannter Weise verzweigt sein, und zwar vorzugsweise durch den Einbau von 0,05 bis 2,0 Mol-%, bezogen auf die Summe der eingesetzten Diphenole, an mindestens trifunktionellen Verbindungen, beispielsweise solchen mit drei oder mehr phenolischen OH-Gruppen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten $M_w$ - (Gewichtsmittel) von 10 000 bis 200 000, vorzugsweise von 20.000 bis 80.000.

Die Herstellung der Polycarbonate kann beispielsweise durch Umsetzung der Diphenole der allgemeinen Formel (II) mit Phosgen nach dem phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird (bezüglich polydiorganosiloxanhaltigen Polycarbonaten siehe beispielsweise DE-OS 33 34 782).

Geeignete Kettenabbrecher sind beispielsweise Phenol, p-tert.-Butylphenol, aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkyl-substituenten gemäß DE-A 35 06 472, wie beispielsweise p-Nonylphenol, 3,5-di-tert.-Butylphenol, p-tert.-Octylphenol, p-Dodecylphenol, 2-(3,5-Dimethyl-heptyl)-phenol und 4-(3,5-Dimethylheptyl)-phenol.

Als Komponente B kommen auch Styrolcopolymere in Betracht. Zu den geeigneten Styrolcopolymeren zählen Styrol-Acrylnitril-Copolymere, α-Methylstyrol-Acrylnitril-Copolymere, Styrol-Maleinsäure-anhydrid-Copolymere, Styrol-Phenylmaleinimid-Copolymere, Styrol-Methylmethacrylat-Copolymere, Styrol-Methylmethacrylat-Acrylnitril-Copolymere, Strol-Acrylnitril-Maleinsäureanhydrid-Copolymere, Styrol-Acrylnitril-Phenylmaleinimid-Copolymere, α-Methylstyrol-Acrylnitril-Methylmethacrylat-Copolymere, α-Methylstyrol-Acrylnitril-t-Butylmethacrylat-Copolymere, Styrol-Acrylnitril-t-Butylmethacrylat-Copolymere.

Bevorzugte Styrolcopolymere enthalten neben Einheiten $b_1$, die sich von Styrol ableiten Einheiten $b_2$, die sich von cyclischen α,β-ungesättigten Dicarbonsäureanhydriden ableiten und Einheiten $b_3$, die sich von

cyclischen $\alpha,\beta$-ungesättigten Dicarbonsäureimiden ableiten.

Der Anteil der Einheiten $b_1$ beträgt bevorzugt 20 bis 90 Mol-%, insbesondere 40 bis 80 Mol-%. Ganz besonders bevorzugt enthalten die Styrolcopolymere 50 bis 75 Mol-% Einheiten $b_1$. Zu den geeigneten Einheiten $b_1$ zählen solche, die sich von $\alpha$-Methylstyrol oder Styrolderivaten, die am aromatischen Kern substituiert sind wie Vinyltoluol, t-Butylstyrol oder Chlorstyrol ableiten. Selbstverständlich können auch Mischungen unterschiedlicher Styrolderivate eingesetzt werden. Ganz besonders bevorzugt wird Styrol verwendet.

Der Anteil der Einheiten $b_2$ beträgt vorzugsweise 1 bis 50 Mol-%. Styrolcopolymere mit wesentlich weniger als 1 Mol-%, beispielsweise solche mit weniger als 0,5 Mol-% der Einheiten $b_2$ sind im allgemeinen nicht hinreichend temperaturbeständig. Solche mit wesentlich mehr als 50 Mol-% lassen sich meist nicht mehr gut verarbeiten, da sie spröde sind. Bevorzugt enthalten die Styrolcopolymere 1 bis 35 Mol-% $b_2$, insbesondere 1 bis 25 Mol-%, $b_2$.

Zu den bevorzugten cyclischen $\alpha,\beta$-ungesättigten Dicarbonsäureanhydriden zählen solche mit 2 bis 20 Kohlenstoffatomen. Die Doppelbindung kann sowohl exocyclisch als auch endocyclisch sein. Darunter sind Maleinsäureanhydrid, Methylmaleinsäureanhydrid oder Itakonsäureanhydrid besonders bevorzugt. Mischungen unterschiedlicher Dicarbonsäureanhydride können ebenfalls verwendet werden.

Die Einheiten $b_3$ sind in den Styrolcopolymeren im allgemeinen von 9 bis 50 Mol-%, bevorzugt von 15 bis 50 Mol-% enthalten. Insbesondere beträgt der Anteil der Einheiten $b_2$ 24 bis 49 Mol-%.

Im allgemeinen entsprechen die cyclischen $\alpha,\beta$-ungesättigten Dicarbonsäureimide den obengenannten Dicarbonsäureanhydriden $b_2$. Der Substituent am Stickstoff ist in der Regel ein $C_1$- bis $C_{20}$-Alkyl, $C_4$- bis $C_{20}$-Cycloalkyl, $C_1$- bis $C_{10}$-Alkyl, $C_6$- bis $C_{18}$-Aryl oder ein $C_6$- bis $C_{18}$-Arylrest. Darunter sind Cyclohexyl und Phenyl besonders bevorzugt.

Ferner können die Styrolcopolymeren noch 0 bis 30 Mol-%, bevorzugt 5 bis 25 Mol-% Einheiten $b_4$ enthalten, die sich von weiteren radikalisch polymerisierbaren Verbindungen ableiten.

Die Styrolcopolymeren enthalten die Einheiten $b_1$ bis $b_4$ in einer statistischen Verteilung. In der Regel weisen die Styrolcopolymeren Molekulargewichte $M_w$ (Gewichtsmittelwert) von 30 000 bis 500 000, bevorzugt 50 000 bis 250 000, insbesondere 70 000 bis 200 000 g/mol auf.

Die Styrolcopolymeren lassen sich z.B. dadurch herstellen, daß man die entsprechenden Monomeren radikalisch polymerisiert. Dabei kann die Umsetzung sowohl in Suspension oder Emulsion als auch in Lösung oder Substanz durchgeführt werden, wobei letzteres bevorzugt wird. Die radikalische Reaktion läßt sich im allgemeinen mit den üblichen Methoden initiieren wie Licht oder bevorzugt mit Radikalstartern wie Peroxiden z.B. Benzoylperoxid.

Daneben können die Styrolcopolymeren wie beispielsweise in der US 4 404 422 beschrieben auch dadurch hergestellt werden, daß zunächst die Komponenten $b_1$, $b_2$ und gegebenenfalls $b_4$ miteinander in einer radikalischen Reaktion umgesetzt werden und anschließend die in dem Reaktionsprodukt enthaltenen Anhydridgruppen teilweise mit entsprechenden primären Aminen oder Ammoniak in Imidgruppen überführt werden. Ganz besonders bevorzugte Amine sind Cyclohexylamin oder Anilin.

Diese Reaktion wird in der Regel in Gegenwart eines tertiären Amins wie Trialkylamine oder Dialkylarylamine, z.B. Triethylamin oder N,N-Diethylanilin als Katalysator bei Temperaturen von 80 bis 350 °C ausgeführt.

Erfindungsgemäß können auch Polyarylensulfide als Komponente B eingesetzt werden. Diese unterscheiden sich von den Polyarylenethern A. Zu den geeigneten Polyarylensulfiden zählen sowohl Polyarylensulfide als auch Polyarylenethersulfide, Polyarylensulfidsulfone oder Polyarylensulfidketone. Besonders bevorzugt werden Polyarylensulfide eingesetzt, die sich wiederholende Struktureinheiten der allgemeinen Formel III

$-Ar^1-S-Ar^2-S-$

worin $Ar^1$ und $Ar^2$ gleich oder verschieden sein können und einen substituierten oder, wie es bevorzugt wird, unsubstituierten zweiwertigen aromatischen Rest bedeuten, enthalten. Als bevorzugte aromatische Reste sind vor allem 1,4-Phenyl, 1,3-Phenyl, 1,2-Napththyl, 2,3-Naphthyl, 1,1'-Biphenyl oder 2,3-Antryl zu nennen. Besonders bevorzugt kommt 1,4-Phenyl in Betracht.

Im allgemeinen liegen die Schmelzviskositäten geeigneter Polyarylensulfide im Bereich von 10 bis 2000 Pa•s bei 300 °C.

Die Polyarylensulfide können beispielsweise durch Umsetzen von Dihalogenarylenen z.B. 1,4-Dichlorbenzol mit Natriumsulfid in einem dipolar aprotischen Lösungsmittel, bevorzugt N-Methylpyrrolidon, hergestellt werden.

Komponente C

Die erfindungsgemäßen Formmassen enthalten als Komponente C von 1 bis 30 Gew.-%, bevorzugt von 5 bis 25 Gew.-%, insbesondere von 6 bis 22 Gew.-% Kohlefasern.

Dabei können Kohlefasern, die nach verschiedenen Herstellverfahren erhältlich sind eingesetzt werden. Beispielsweise eignen sich Kohlefasern, die aus Polyacrylnitril hergestellt wurden, ebenso wie solche die aus Pech, Rayon oder aus mit Kohlenwasserstoffen angereicherten Gasen. Derartige Herstellverfahren sind beispielsweise in Ullmann's Encyclopedia of Industrial Chemistry, (1988), Band A11, S. 42 ff beschrieben.

Bevorzugt werden Kohlefasern verwendet, die bei den Herstell- und Verarbeitungstemperaturen der erfindungsgemäßen Formmassen stabil sind. Besonders bevorzugt werden Kohlefasern eingesetzt, die während einer thermogravimetrischen (TGA-)Messung bei einer Aufheizrate von 10 K/min von Raumtemperatur bis zu einer Temperatur von 300 °C einen Gewichtsverlust von weniger als 5 Gew.-%, vorzugsweise weniger als 3 Gew.-% zeigen.

Die erfindungsgemäßen Formmassen enthalten bevorzugt Kohlefasern, die eine Zugfestigkeit von 500 bis 5 000 MPa haben. Bevorzugte Kohlefasern haben eine Dichte von 1,3 bis 1,8 $g/cm^3$. Die Dichte der Kohlefasern kann aber auch darüber liegen, beispielsweise 1,9 $g/cm^3$ betragen.

Bevorzugt werden geschlichtete Kohlefasern eingesetzt. Zu den geeigneten Schlichten zählen Epoxy-Schlichten, Polyester-Schlichten oder Polyurethan-Schlichten.

Die Kohlefasern können in Form von Rovings, Schnittfasern oder gemahlen zur Herstellung der erfindungsgemäßen Formmassen verwendet werden. In der fertigen Formmasse liegt die mittlere Faserlänge, berechnet als Zahlenmittelwert, unter 120 µm. Bevorzugt beträgt die mittlere Faserlänge (Zahlenmittelwert) von 40 bis 115 µm, insbesondere von 60 bis 110 µm.

Im allgemeinen weisen die Kohlefasern einen mittleren Durchmesser (Zahlenmittelwert) von 1 bis 20 µm, bevorzugt von 1 bis 10 µm, auf.

Komponente D

Neben den wesentlichen Komponenten können die erfindungsgemäßen Formmassen bis zu 40 Gew.-%, bevorzugt 0 bis 35 Gew.-%, insbesondere von 0,5 bis 30 Gew.-% Füllstoffe enthalten. Diese können aus der Gruppe der amorphen Kieselsäuren, Magnesiumcarbonate, gepulverte Quarze, Glimmer, Talkum, Feldspate und Calciumsilicate ausgewählt sein. Bevorzugte Calciumsilikate sind Wollastonit oder Koalin, insbesondere kalzinierter Koalin.

Komponente E

Als weitere Komponente können die erfindungsgemäßen Formmassen 0 bis 40 Gew.-% schlagzähmodifizierende Kautschuke enthalten. Vorzugsweise sind die schlagzäh-modifizierenden Kautschuke in bis zu 25 Gew.-%, insbesondere von 0 bis 20 Gew.-% in den erfindungsgemäßen Formmassen enthalten.

Als Kautschuke, die die Zähigkeit der Formmassen erhöhen, seien z.B. folgende genannt:
EP- bzw. EPDM-Kautschuke, die mit funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25 °C, unter einem weichen Bestandteil ein Polymerisat mit einer

Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyl-tetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt im allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkette Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Komponente F

Neben den beschriebenen Bestandteilen A bis E können die erfindungsgemäßen Formmassen noch 0 bis 40 Gew.-% Additive wie Flammschutzmittel, Pigmente und Stabilisatoren enthalten.

Die erfindungsgemäßen Formmassen können nach an sich bekannten Verfahren, beispielsweise Extrusion, hergestellt werden.

Die erfindungsgemäßen Formmassen können z.B. hergestellt werden, indem man die Ausgangskomponenten in üblichen Mischvorrichtungen wie Schneckenextrudern vorzugsweise Zweischneckenextrudern, Brabender-Mühlen oder Banburry-Mühlen sowie Knetern mischt und anschließend extrudiert. Nach der Extrusion wird das Extrudat abgekühlt und zerkleinert. Bevorzugtes Herstellverfahren ist die Extrusion.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 20 Minuten bei Temperaturen von 280 bis 400°C erforderlich.

Die erfindungsgemäßen Formmassen lassen sich thermoplastisch verarbeiten. Sie zeichnen sich durch hohe Wärmeformbeständigkeiten und sehr gute Fließfähigkeiten aus. Die aus den Formmassen erhältlichen Formkörper weisen einen definierten Oberflächenwiderstand auf und zeichnen sich durch ihre geringe Neigung zum Verzug aus. Die erfindungsgemäßen Formmassen eignen sich zum Herstellen von Formkörpern, Fasern oder Filmen, insbesondere aber zum Herstellen großflächiger Formkörper oder Formkörpern einer komplexen Struktur. Besonders eignen sich die erfindungsgemäßen Formmassen zum Herstellen von Formkörpern für den Elektro- oder Elektronikbereich wie Chip Trays oder Chip Carrier.

Beispiele

Allgemeine Arbeitsvorschrift

Die Komponenten wurden in einem Zweiwellenextruder bei einer Massetemperatur von 320 bis 380 °C gemischt. Die Schmelze wurde durch ein Wasserbad geleitet und granuliert.

Das getrocknete Granulat wurde bei 330 bis 360 °C zu Normkleinstäben, Rundscheiben und Testkästchen verarbeitet.

Anwendungstechnische Prüfungen

Die mittlere Faserlänge (Zahlenmittelwert) der Kohlefasern wurde dadurch bestimmt, daß die polymeren Bestandteile der Formmassen in einem geeigneten Lösungsmittel (beispielsweise N-Methylpyrrolidon oder konzentrierte Schwefelsäure) gelöst und die Kohlefasern durch Filtration isoliert wurden. Anschließend wurden die Kohlefasern getrocknet, in Zeiss-Immersionsöl aufgeschwemmt und deren Länge mit einem Bildverarbeitungssystem bestimmt, das mindestens 2 000 Fasern erfaßt. Die mittlere Faserlänge wurde jeweils vor der Kompoundierung und nach der Kompoundierung, d.h. am Granulat bestimmt.

Die Wärmeformbeständigkeit der Proben wurde mittels der Vicat-Erweichungstemperatur beurteilt. Die Vicat-Erweichungstemperatur wurde nach DIN 53 460, mit einer Kraft von 49,05 N und einer Temperatursteigerung von 50 K je Stunde, an Normkleinstäben ermittelt.

Die Fließfähigkeit der Formmassen wurde nach DIN 53 735 bei einer Temperatur von 320 °C und einer Belastung von 21,6 kg bestimmt.

Der Verzug wurde an Testkästchen (s. Abb. 1) ermittelt, dazu wurde an der offenen Seite die Breite am Ende und in der Mitte des Testkästchens bestimmt, die Differenz dieser Werte wurde durch 2 dividiert. Es wurden jeweils 5 Probekörper untersucht, in Tabelle 1 ist der Mittelwert angegeben.

Der Oberflächenwiderstand wurde an Rundscheiben nach VDE 0303 bestimmt.

Die Zusammensetzung der Formmassen und die Ergebnisse der anwendungstechnischen Prüfungen sind der Tabelle zu entnehmen.

Komponente $A_1$

Polyarylenether mit überwiegenden Struktureinheiten nach Formel $I_2$ (VZ = 56 ml/g; gemessen in 1 %iger Lösung eines Gemisches von Phenol und 1,2-Dichlorbenzol, z.B. Handelsprodukt Ultrason E 2010, BASF).

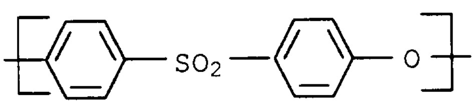

($I_2$),

Komponente $B_1$

Teilaromatisches Copolyamid, erhalten durch Umsetzung der folgenden Monomeren

34,09 mol-% Terephthalsäure

31,82 mol-% ε-Caprolactam

34,09 mol-% Hexamethylendiamin,

mit einer relativen Viskosität von 2,4 (gemessen in 1 gew.-%iger Lösung in 96 %iger Schwefelsäure bei 25 °C).

Komponente $B_2$

Polycarbonat, erhalten durch Kondensation von Phosgen und Bisphenol A (2,2-Bis(4-hydroxyphenyl)-propan), charakterisiert durch eine Viskositätszahl von 61,2 ml/g (gemessen in 0,5 %iger Dichlormethan-Lösung bei 23 °C)

Komponente $B_3$

Terpolymer, bestehend aus 58 mol-% Styrol, 3 mol-% Maleinsäureanhydrid und 39 mol-% N-Phenylmaleinimid, charakterisiert durch ein gewichtsmittleres Molekulargewicht von 160 000 g/mol.

Komponente $C_1$

Gemahlene Kohlefasern, charakterisiert durch eine mittlere Faserlänge vor Kompoundierung von 192 µm.

Komponente $C_2$

Gemahlene Kohlefasern, charakterisiert durch eine mittlere Faserlänge vor Kompoundierung von 141 µm.

Komponente $C_3$

Gemahlene Kohlefasern, charakterisiert durch eine mittlere Faserlänge vor Kompoundierung von 103 µm.

Komponente D

Wollastonit

Tabelle

| Komponente [Gew.-%] | Beispiele Vergleich V1 | V2 | V3 | Erfindungsgemäß 1 | 2 | 3 | 4 |
|---|---|---|---|---|---|---|---|
| A | 85 | 72 | 72 | 72 | 60 | 60 | 60 |
| $B_1$ | | 13 | 13 | 13 | | | 15 |
| $B_2$ | | | | | 20 | | |
| $B_3$ | | | | | | 20 | |
| $C_1$ | | 15 | | | | | |
| $C_2$ | | | 15 | | | | |
| $C_3$ | 15 | | | 15 | 20 | 20 | 15 |
| D | | | | | | | 10 |
| Eigenschaften | | | | | | | |
| mittlere Faserlänge[1)] [µm] | 97 | 186 | 138 | 99 | 96 | 95 | 98 |
| Vicat B [°C] | 217 | 211 | 211 | 211 | 208 | 209 | 210 |
| MVI* [ml/10'] | 29 | 160 | 163 | 170 | 96 | 90 | 132 |
| Verzug [cm] | <0,01 | 0,05 | 0,04 | 0,01 | <0,01 | <0,01 | <0,01 |
| Oberflächenwiderstand [Ω] | $10^6$ | $10^3$ | $10^4$ | $10^6$ | $10^4$ | $10^4$ | $10^5$ |

1) gemessen am Granulat

* 320°C; 21,6 kg

## Patentansprüche

1. Formmassen aus

   A) 25 bis 98 Gew.-% Polyarylenether, enthaltend sich wiederholende Struktureinheiten der allgemeinen Formel I

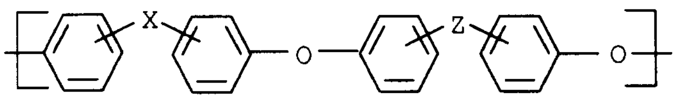

(I)

oder Struktureinheiten I, deren aromatische Kerne mit $C_1$- bis $C_6$-Alkyl-, $C_1$- bis $C_6$-Alkoxy-, Aryl-, Chlor- oder Fluor substituiert sein können, wobei

x -$SO_2$-, -SO-, -S-, -O-, -CO-, -N = N-,-RC = $CR^a$-, -$CR^bR^c$- oder eine chemische Bindung sein kann und

Z ausgewählt ist aus -$SO_2$-, -SO-, -CO-, -N = N- und -RC = $CR^a$-, wobei

R und $R^a$ jeweils Wasserstoff oder eine $C_1$- bis $C_6$-Alkylgruppe darstellen,

$R^b$ und $R^c$ jeweils Wasserstoff oder eine $C_1$- bis $C_6$-Alkyl-, $C_4$- bis $C_{10}$ -Cycloalkyl-, $C_1$- bis $C_6$-Alkoxy- oder Arylgruppe oder jeweils deren Fluor- oder Chlorderivate sein können,

B) 1 bis 45 Gew.-% weiterer Polymerer, ausgewählt aus der Gruppe der Polyamide, Polycarbonate, Styrolcopolymeren und von den Polyarylenethern (A) verschiedenen Polyarylensulfiden,

C) 1 bis 30 Gew.-% Kohlefasern einer Länge von weniger als 120 µm, berechnet als Zahlenmittelwert,

D) 0 bis 40 Gew.-% Füllstoffe ausgewählt aus der Gruppe der amorphen Kieselsäuren, Magnesiumcarbonate, gepulverte Quarze, Glimmer, Talkum, Feldspate und Calciumsilikate,

E) 0 bis 40 Gew.-% schlagzähmodifizierende Kautschuke und

F) 0 bis 40 Gew.-% weiterer Additive, wobei die Summe der Komponenten A bis F 100 Gew.-% ergibt.

**2.** Formmassen nach Anspruch 1, in denen die Polyarylenether (A)

$a_1$) 0 bis 100 Mol-% sich wiederholende Struktureinheiten

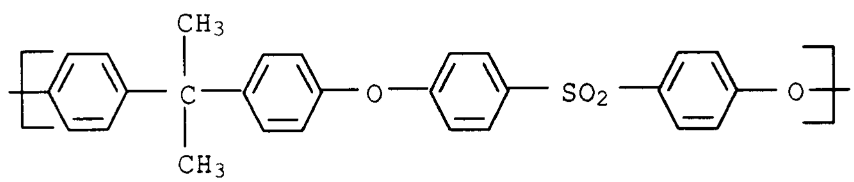

($I_1$)

und

$a_2$) 0 bis 100 Mol-% sich wiederholende Struktureinheiten

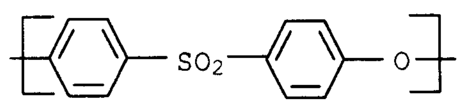

($I_2$)

enthalten.

**3.** Formmassen nach einem der Ansprüche 1 oder 2, in denen die weiteren Polymeren (B) teilaromatische Polyamide sind.

**4.** Formmassen nach einem der Ansprüche 1 bis 3, in denen die weiteren Polymeren (B) teilaromatische Polyamide aufgebaut aus

$b_1$) 50 bis 80 Gew.-% Einheiten, die sich von Terephthalsäure und Hexamethylendiamin ableiten und

$b_2$) 20 bis 50 Gew.-% Einheiten, die sich von ε-Caprolactam ableiten sind.

**5.** Formmassen nach einem der Ansprüche 1 bis 4, in denen die Kohlefasern eine Länge von 60 bis 110 µm, berechnet als Zahlenmittelwert haben.

**6.** Verfahren zur Herstellung von Formmassen aus
A) 25 bis 98 Gew.-% Polyarylenether, enthaltend
sich wiederholende Struktureinheiten der allgemeinen Formel I

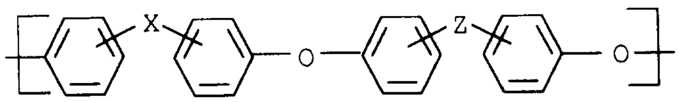

(I)

oder Struktureinheiten I, deren aromatische Kerne mit $C_1$- bis $C_6$-Alkyl-, $C_1$- bis $C_6$-Alkoxy-, Aryl-, Chlor- oder Fluor substituiert sein können, wobei

X -$SO_2$-, -SO-, -S-, -O-, -CO-,
-N = N-, -RC = $CR^a$-, -$CR^bR^c$- oder eine chemische Bindung sein kann und

Z ausgewählt ist aus
-$SO_2$-, -SO-, -CO-,
-N = N- und -RC = $CR^-$,
wobei

R und $R^a$ jeweils Wasserstoff oder eine $C_1$- bis $C_6$-Alkylgruppe darstellen,

$R^b$ und $R^c$ jeweils Wasserstoff oder eine $C_1$ bis $C_6$-Alkyl-, $C_4$- bis $C_{10}$-Cycloalkyl-, $C_1$- bis $C_6$-Alkoxy- oder Arylgruppe oder jeweils deren Fluor- oder Chlorderivate sein können,

B) 1 bis 45 Gew.-% weiterer Polymerer, ausgewählt aus der Gruppe der Polyamide, Polycarbonate, Styrolcopolymeren und von den Polyarylenethern (A) verschiedenen Polyarylensulfiden,

C) 1 bis 30 Gew.-% Kohlefasern einer Länge von weniger als 120 µm, berechnet als Zahlenmittelwert,

D) 0 bis 40 Gew.-% Füllstoffe ausgewählt aus der Gruppe der amorphen Kieselsäuren, Magnesiumcarbonate, gepulverte Quarze, Glimmer, Talkum, Feldspate und Calciumsilikate,

E) 0 bis 40 Gew.-% schlagzähmodifizierende Kautschuke und

F) 0 bis 40 Gew.-% weiterer Additive, wobei die Summe der Komponenten A bis F 100 Gew.-% ergibt,

dadurch gekennzeichnet, daß man die Komponenten A bis F so mischt, daß die Kohlefasern die erfindungsgemäße Länge aufweisen.

**7.** Verwendung der Formmassen gemäß einem der Ansprüche 1 bis 5 zur Herstellung von Formkörpern, Fasern oder Filmen.

**8.** Formkörper, Fasern oder Filme, enthaltend Formmassen gemäß einem der Ansprüche 1 bis 5.

**9.** Formkörper nach Anspruch 8, der ein Chip Tray oder Chip Carrier ist.